Europäisches Patentamt

**European Patent Office**

**Office européen des brevets**

(19)

(11) Numéro de publication: **0 085 011**
A1

(12)

# DEMANDE DE BREVET EUROPEEN

(21) Numéro de dépôt: **83400160.4**

(22) Date de dépôt: **24.01.83**

(51) Int. Cl.³: **E 04 C  2/22,** E 04 C  2/26,
E 04 B  2/76, E 04 B  2/60

(30) Priorité: **26.01.82  FR 8201172**
**19.04.82  FR 8206665**
**17.12.82  FR 8221187**

(43) Date de publication de la demande: **03.08.83**
**Bulletin 83/31**

(84) Etats contractants désignés: **BE CH DE GB IT LI NL**

(71) Demandeur: **Calafell, Claude, 23, Avenue Montfleury,
F-06300 Nice (FR)**

(72) Inventeur: **Calafell, Claude, 23, Avenue Montfleury,
F-06300 Nice (FR)**

(74) Mandataire: **Rodhain, Claude, Cabinet Claude
RODHAIN 30, rue La Boétie, F-75008 Paris (FR)**

(54) **Panneau-mur autoporteur pour murs intérieurs et extérieurs de constructions.**

(57) L'élément de paroi comprenant une âme (5), une armature (6) reliée à cette dernière par des moyens de fixation (8) et des moyens (9) de rigidification de l'âme, comporte des moyens d'accouplement à profils complémentaires (8, 9) situés sur deux bords opposés de l'âme pour son accouplement à d'autres éléments de paroi contigus.

L'invention est applicable aux constructions individuelles et abris et hangars industriels et agricoles et au cuvelage de piscines et ouvrages enterrés.

3

"Panneau-mur autoporteur pour murs intérieurs et extérieurs de constructions".

La présente invention concerne un élément de paroi composite modulaire, tel qu'un panneau de gros-oeuvre autoporteur prêt à habiller, à isolation intégrée, utilisable pour la réalisation d'ouvrages dits de thermo-maçonnerie, c'est-à-dire d'ouvrages composés de matériaux isolants unis par une ossature, notamment du type panneau-mur autoporteur pour murs intérieurs et extérieurs et pour toîtures de maisons individuelles, de constructions légères telles que des bungalows démontables, des abris de surveillance, des hangars industriels et agricoles et des abris provisoires de chantiers.

Dans les constructions connues de ce genre, les panneaux-murs utilisés sont des éléments modulaires qui, pour des raisons de rigidité et de poids inhérents à leur mode de construction, ont des dimensions nécessairement limitées, à savoir une longueur marginale de l'ordre de 1,25 m, et une hauteur de 2,50 m, ce qui présente des inconvénients notables, notamment lors du montage et de l'assemblage des panneaux pour réaliser la construction, c'est-à-dire un nombre assez important de panneaux et des durées de montage importantes, d'où un prix de revient relativement élevé.

Par ailleurs, selon la technique traditionnelle de fabrication et d'érection de telles constructions légères, on effectue habituellement en premier lieu la pose d'ossatures de supports et/ou de maintien, que l'on complète par un remplissage ultérieur par des panneaux de façade en général préfabriqués en usine.

Ceci présente deux inconvénients notables, à savoir une perte de temps à la pose avec la nécessité d'adapter lesdits panneaux au cas considéré, et en outre une impossibilité fréquente d'adapter précisément de tels panneaux aux conditions du chantier, notamment dans le cas de certaines techniques utilisant des inserts moulés dans une mousse.

C'est pourquoi la présente invention a pour but de réaliser des composants porteurs monoblocs à isolation incorporée, possédant des dimensions nettement supérieures à celles des panneaux connus tout en conservant le même poids admissible pour des manipulations de mise en place manuelle, et ce en rigidifiant horizontalement et verticalement l'isolant lui-même que l'on utilise ainsi directement comme composant porteur, pour la réalisation d'ouvrages de "thermo-maçonnerie", qui, par analogie à la maçonnerie, sont des ouvrages dans lesquels le liant est remplacé par une ossature intégrée et les briques par des plaques thermo-isolantes rigides, et ce, tout en permettant la pose simultanée de l'ossature et des plaques ou panneaux isolants.

Ce problème est résolu conformément à l'invention grâce au fait que l'élément de paroi composite est constitué par une âme à grand pouvoir d'isolation thermique et/ou phonique, et par au moins une armature servant de moyen d'ancrage à un revêtement et reliée sur au moins l'une des faces de ladite âme par des moyens de fixation, cet élément composite comportant des moyens de rigidification de l'âme servant simultanément de moyens d'accouplement des âmes de plusieurs éléments de paroi entre eux.

Selon une variante de réalisation de l'invention, les moyens de fixation de l'armature à l'âme de l'élément de paroi modulaire sont constitués par au moins un profilé rigide, allongé rapporté par rapport à ladite âme et formant entretoise entre le revêtement et l'âme.

Ceci permet ainsi de réaliser des ouvrages de thermo-maçonnerie avec différents avantages indiqués ci-après.

On peut réaliser sur le chantier, à la manière de "jeux de construction", de grands éléments porteurs monoblocs, de très grandes dimensions, jusqu'à 12 m2 environ, très légers, (entre 4 et 10 kg/m2 avant habillage), fabriqués en comprimant une âme à grand pouvoir d'isolation thermique par une ossature intégrée, constituée par exemple de potelets verticaux sur une face de l'âme et horizontaux sur l'autre face, avec présence d'au moins une lame d'air créée sur une face par le profilé de fixation rigide formant entretoise. Selon les types de potelets constitutifs de cette ossature intégrée et les revêtements extérieurs et intérieurs choisis, on peut prévoir plusieurs systèmes de fixation des revêtements à la thermo-maçonnerie.

Avec un tel agencement, on conçoit que les éléments de paroi selon l'invention sont aisément et rapidement démontables, remontables, permettent des habillages très divers et des transformations commodes tout en permettant une fixation souple, fiable et étanche de revêtements extérieurs.

Selon une caractéristique avantageuse, l'organe rigide de fixation est un profilé tubulaire métallique dont le côté plat jouxtant l'âme isolante comporte une bande latérale plate s'appliquant sur l'âme et sur lequel est vissée l'armature, ledit profilé étant fixé à l'âme isolante par des boulons traversants.

Dans le cas de panneaux selon l'invention en éléments composites de très grande longueur - par exemple jusqu'à 6 mètres - il est avantageux selon une autre caractéristique de l'invention que l'élément de paroi composite monobloc comporte des moyens d'accouplement à profils complémentaires situés sur une face ou sur les deux faces opposées de l'élément de paroi et sur deux bords opposés de l'âme pour son accouplement à d'autres éléments de paroi contigus, et est muni, à proximité de chacun desdits moyens d'accouplement, d'une rainure longitudinale d'emboîtement recevant l'aile latérale d'un profilé tubulaire amovible de forme correspondante constituant lesdits moyens de fixation et servant de moyens de manipulation dudit élément de paroi.

De préférence, les moyens d'accouplement sont des feuillures à angle rentrant de 90° et des moulures à angle sortant de 90°, disposées parallèlement sur deux bords opposés de l'élément de paroi.

Ainsi, on voit que, d'une part, ces dispositions permettent un emboîtement aisé des éléments de paroi lors de leur montage, et d'autre part, une manipulation aisée desdits éléments au moyen du profilé amovible emboîtable dans la ranure de chaque élément et servant d'organe de préhension commode au montage, puis d'élément de fixation de l'armature de revêtement et également d'élément de rigidification complémentaire de l'élément de paroi.

- 4 -                                    0085011

Par ailleurs, dans le cas de revêtements fragiles, tels que des plaques de verre, d'amiante-ciment ou analogues, difficiles à fixer, impliquant des perçages pour leur fixation délicats sur les armatures d'ancrage ou sur les moyens de rigidification et pour lesquels il apparait des déformations mécaniques sous l'effet thermique au droit des fixations classiques (boulons, vis, etc...) et en outre souvent des défauts d'étanchéité particulièrement graves dans le cas de l'emploi de tels revêtements pour des toitures notamment, il est proposé selon une variante de réalisation de l'invention que les moyens de fixation soient constitués par un profilé de support en forme générale de T en coupe transversale, servant simultanément d'entretoise entre l'élément de paroi et le revêtement en forme de plaques, de moyens supplémentaires de rigidification et de système d'évacuation des eaux pluviales, et que les moyens d'accrochage du revêtement soient formés par au moins un organe fixe d'accouplement solidaire du profilé de support et par au moins un organe amovible d'accouplement apte à retenir en position ledit revêtement, lesdits organes fixe et amovible d'accouplement pouvant être réunis l'un à l'autre selon une liaison par formes complémentaires avec emboîtement par encliquetage brusque.

Selon une forme de réalisation avantageuse, l'organe fixe d'accouplement est formé par un double rebord longitudinal d'accrochage solidaire du profilé en T disposé parallèlement au plan de la base de ce dernier, et l'organe amovible d'accouplement est constitué par un clip élastique d'accrochage qui se compose d'un élément en U renversé en coupe transversale dont les extrémités des branches sont solidaires de deux flasques latéraux obliques rentrant intérieurement au niveau de leur jonction avec les branches du U par des bords saillants et délimitant une ouverture en forme de fente, dont la largeur est inférieure à la largeur du rebord double du profilé en T, qui - à l'état accouplé - est emboîté dans la cavité du U au-delà de ladite fente.

Ainsi, cette réalisation fournit une configuration d'accrochage souple ou flottant, extrêmement simple, mais efficace et avantageuse pour tous types de revêtement à déformation mécanique sous l'effet des différences thermiques.

En outre, de façon avantageuse, l'élément de paroi comporte des moyens d'assemblage intégrés et démontables constitués par un
système de boulonnage recto-verso avec manchon-entretoise encastré dans l'élément de paroi.

Il est manifeste que les caractéristiques
indiquées ci-dessus confèrent à l'élément de paroi selon l'invention une capacité accrue et simplifiée de l'habillage par des revêtements les plus divers, un système de fixation intégré approprié
augmentant les opportunités et facilités d'accrochage des revêtements optionnels, et la démontabilité aisée de panneaux de revêtement, et ce, par exemple dans le cas de panneaux solaires escamotables aisément par retournement selon les saisons.

On voit donc de façon résumée que les éléments de paroi composites modulaires monoblocs conformes à l'invention et utilisables dans des ouvrages de thermo-maçonnerie présentent comme avantages essentiels par rapport aux techniques traditionnelles de fabrication de ce type :

- Le fait que l'on peut maintenant réaliser
des composants porteurs à isolation intégrée possédant des dimensions très supérieures à celles des panneaux connus, tout en conservant un poids admissible pour des manipulations aisées.;

- Le fait qu'en comprimant des plaques rigides
de matériaux isolants par des éléments d'ossature, supports de revêtement avec une lame d'air intercalée, on peut réaliser la pose
simultanée de l'ossature et des panneaux isolants, contrairement
à la technique traditionnelle ;

- La préfabrication manuelle de grands éléments monoblocs sur le chantier, sur mesure, sans voirie, camions
ni fondations lourdes, permet des "jeux de contruction" à la mesure
de chaque ouvrage avec adaptation des potelets d'ossature et des
organes de fixation et de rigidification à la forme et aux dimensions du panneau ainsi qu'au type d'ancrage et de revêtements choisis, et ce contrairement à certaines techniques existantes ;

- une très bonne stabilité mécanique de ces systèmes monoblocs ;

- En outre, par leur mode d'assemblage, ces éléments monoblocs forment des contreventements les uns par rapport aux autres, une fois que des éléments de toit, murs, planchers sont bloqués entre eux (telle une maçonnerie, une fois le liant séché). De plus la flexibilité - avant blocage entre eux - desdits éléments monoblocs permet, par exemple, de constituer des toits à surface gauche réglée sans coût supplémentaire, à des fins fonctionnelles ou esthétiques.

On notera, comme indiqué ci-après, les quatre composants de la sécurité incendie et durabilité des éléments monoblocs :

1°) Les matériaux isolants constitutifs de l'âme et qui participent à la tenue mécanique de l'ossature intégrée, peuvent être constitués par toutes compressions d'algues, déchets, végétaux et minéraux récupérables, mousses rigides de résines synthétiques (polystyrène expansé, extrudé, polyuréthane, formophénolique, chlorure de polyvinyle).

2°) L'ossature intégrée dans l'âme à grand pouvoir d'isolation thermique peut être constituée de potelets et profilés en fer, acier galvanisé, aliminium anodisé ou non, bois traité ou non, plastiques divers etc...

3°) Les systèmes de liaison entre les revêtements extérieurs et intérieurs et le gros oeuvre thermo-isolant peuvent être soit à blocage mécanique : boulons, vis, rivets, soit à fixation flottante par clips pour permettre le jeu des revêtements (amiante-ciment par exemple) sous l'effet des différences thermiques ou la réversibilité de capteurs solaires saisonniers.

4°) Les revêtements intérieurs et extérieurs dont les caractéristiques sont très variables en fonction des impératifs (utilisation des matériaux et de la main-d'oeuvre locale, récupérations, autoconstructions, climat,etc...)

D'autres caractéristiques et avantages de
l'invention ressortiront dans la description qui va suivre prise
en référence aux dessins annexés, sur lesquels :

- La fig.1 représente une vue générale en
perspective de plusieurs éléments de paroi selon une première forme de réalisation de l'invention, réunis pour constituer un mur.

- la fig.2 est une vue en perspective d'un
système de rigidification et de raccordement d'éléments de paroi
voisins ;

- la fig.3 est une vue en perspective du
système de rigidification et de raccordement d'éléments de paroi
voisins montés sur des liteaux ;

- la fig.4 représente une vue en perspective
d'une variante d'un élément de paroi conforme à l'invention ;

- Les fig.5, 6 et 7 montrent respectivement une
vue en coupe verticale transversale, une vue en coupe horizontale
longitudinale et une vue de face d'un pan de mur réalisé par assemblage de plusieurs éléments de paroi de la fig.4 ;

- la fig.8 représente une vue en perspective
d'une autre variante du panneau-mur formé d'éléments de paroi conformes à l'invention ;

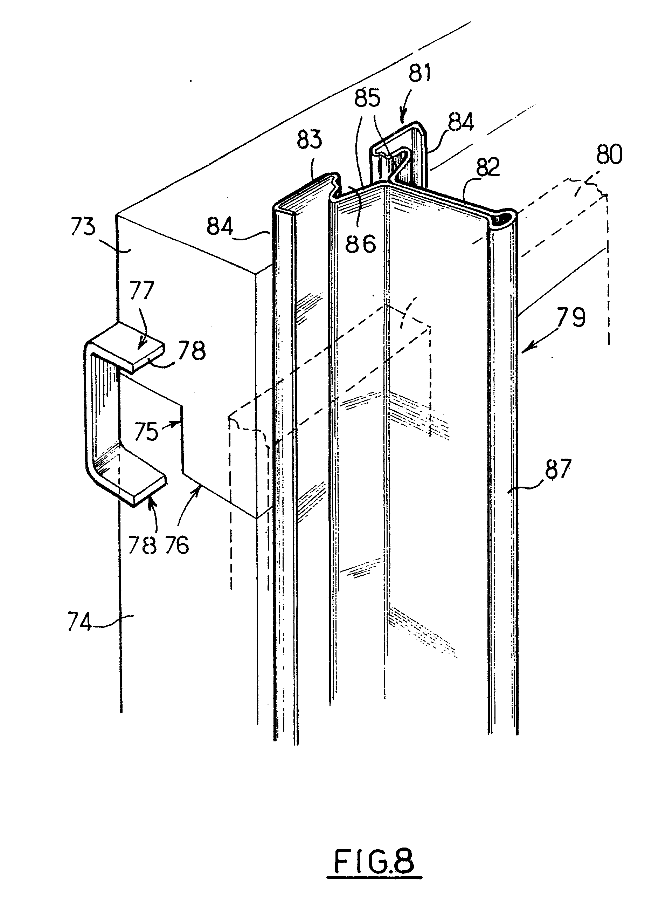

- la fig.9 montre une vue en perspective explosée, détaillée du système de fixation intégré et des moyens
d'accrochage de revêtement, mis en oeuvre dans le panneau-mur de
la fig.8 ;

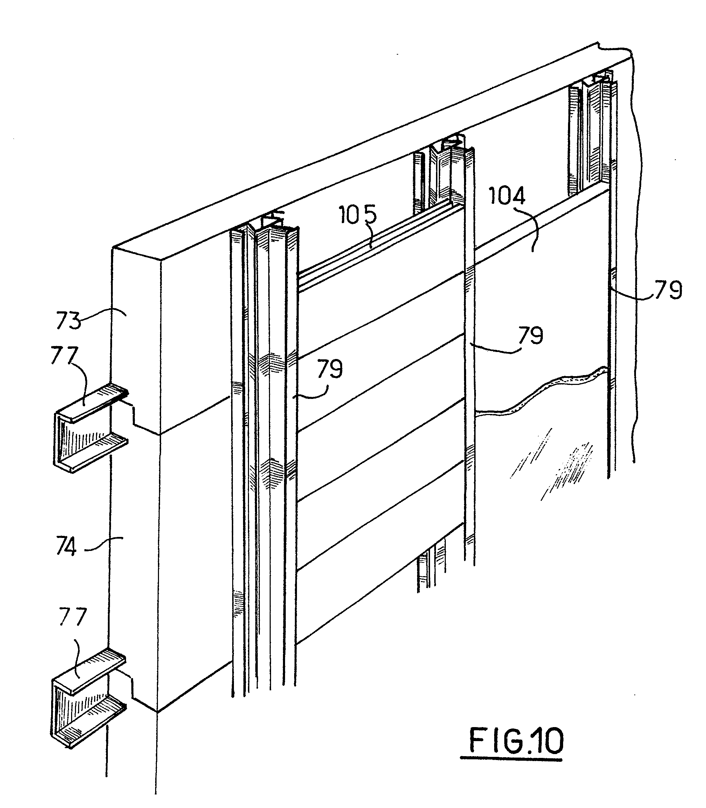

- la fig.10 montre une vue en perspective
schématique d'un panneau-mur complet réalisé à l'aide d'éléments
de paroi conformément à la fig.8.

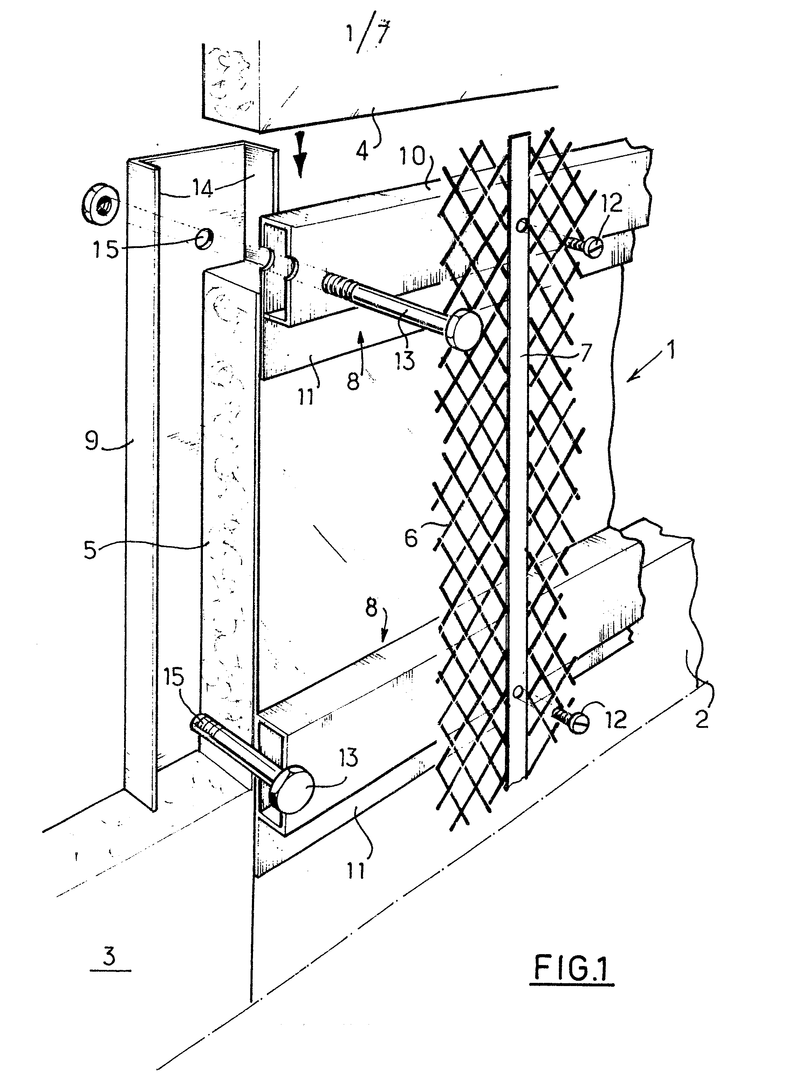

Sur la vue générale en perspective de la fig.1,
on a représenté une partie d'un mur vertical, formé par la réunion
de plusieurs éléments de paroi rectangulaires ou carrés, identiques
1 à 4, conformes à l'invention, qui sont fixés à une ossature verticale non représentée, formée par exemple de chevrons de bois ou
de potelets en aluminium disposés à intervalles réguliers, et ce
de façon classique entre une lisse haute et une lisse basse, de
dimensions appropriées, également non représentées.

Chaque élément de paroi composite est constitué par une âme 5 à grand pouvoir d'isolation thermique et/ou phonique formée de préférence par une mousse rigide de résine synthétique, par exemple une mousse de polyuréthane, de résine phénolique, de polystyrène extrudé ou expansé, ou encore de polyisocyanurate, et par un élément de revêtement 6 constitué par un treillis métallique en métal déployé représenté très schématiquement sous la forme par exemple de bandes réunies au niveau d'une bande verticale de jonction 7 étroite.

Selon une variante, il est également possible de réaliser l'élément 6 sous la forme d'un revêtement continu ou ajouré en bois ou d'un tricot de fibres synthétiques.

Les éléments de paroi 1, 4, comportent en outre des moyens 8 de fixation de l'élément de revêtement 6 à l'âme isolante 5 décrite ci-après, ainsi que des moyens 9 de rigidification de l'âme 5 décrite plus loin et servant simultanément de moyens d'accouplement des âmes des différents éléments de paroi.

Dans la réalisation de la fig.1, on voit que les moyens 8 de fixation du treillis métallique 6 à l'âme 5 sont constitués par des organes rigides horizontaux 10 rapportés sur l'âme 5 et formant entretoises entre cette dernière et le treillis 6, qui, tout en ménageant une lame d'air, peut être prévu sur une ou sur les deux faces de l'élément de paroi 1.

Les organes rigides de fixation 10 sont réalisés sous la forme de profilés tubulaires métalliques de section rectangulaire en saillie sur l'âme 5, et dont le côté plat jouxtant l'âme 5 se prolonge sous la forme d'une aile latérale plate allongée 11 appliquée sur l'âme 5 et sur lequel le treillis métallique (ou le revêtement en bois) 6 peut être fixé par vissage, clouage ou analogue. Dans la réalisation de la fig.1, le treillis est fixé directement, au niveau de ses bandes de jonction 7, par des vis 12 dans des trous non visibles ménagés dans les parties saillantes du profilé 10.

Dans cette réalisation, chaque profilé de fixation 10 est disposé à la partie inférieure de chaque élément de paroi, tel que 4, en y étant fixé par des boulons traversants 13, de manière que son aile latérale plate 11 s'étende devant le haut de l'élément de paroi, tel que 1, de manière à l'empêcher de tomber vers l'extérieur.

Les moyens 9 de rigidification de l'âme 5, qui servent à accoupler entre eux les âmes d'éléments de paroi voisins, tels que 2 et 3, qui sont contigus le long d'un plan vertical, dans lequel se trouvent disposés les boulons 13, sont réalisés sous la forme de cornières ou de profilés en U, dont les branches latérales 14 sont encastrées à force dans la face arrière ou intérieure des éléments de paroi 1,4. Les boulons traversants 13 maintenant les profilés 10 à l'âme isolante 5 traversent des trous 15 ménagés dans les profilés en U 9 et serrent également ces derniers contre l'âme 5.

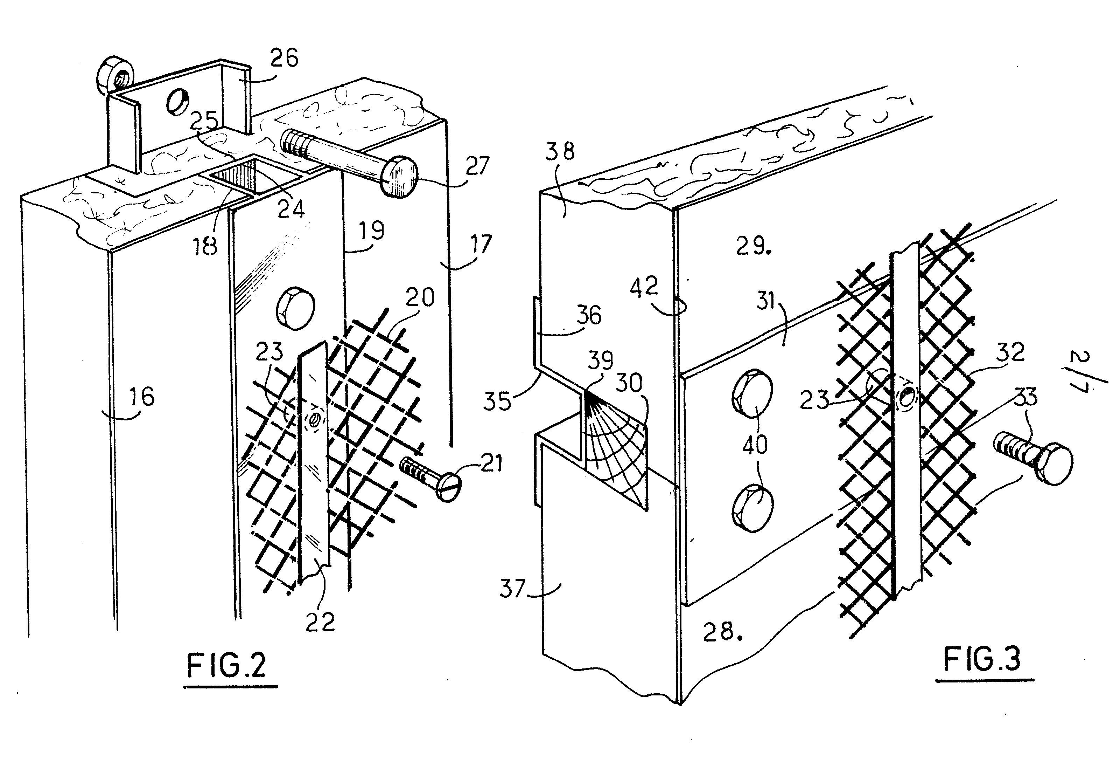

Sur la fig.2, qui montre une vue en perspective d'un autre système de rigidification et de raccordement d'éléments de paroi 16,17, voisins s'emboitant l'un dans l'autre selon une liaison du type tenon-mortaise, les moyens de rigidification et de raccordement sont constitués par un premier profilé vertical 18 en forme de oméga fermé en coupe transversale, dont la face plane 19 en forme de bande ou de plaque sert à la fixation de l'élément de revêtement 20 (ici un treillis métallique), et par un second profilé décrit plus loin. Ce dernier est fixé au moyen de vis 21 maintenant le treillis au niveau de bandes verticales de jonction 22 sur des embouts taraudés saillants 23 fixés sur la plaque 19, et formant entretoises, ménageant un espace d'air entre le treillis et la plaque 19 et l'âme 5 des éléments de paroi 16 et 17. Naturellement, le treillis pourrait être fixé sans les entretoises 23 à la plaque 19, comme dans le cas de la fig.1.

Le côté 24 en forme de U en coupe transversale, tourné vers les âmes des éléments de paroi voisins 16,17, s'engage dans un évidement correspondant 25 de l'élément 17, tout en étant adjacent à une partie de l'autre élément 16.

Le second profilé mentionné qui constitue en partie le système de rigidification et de raccordement, est un profilé en U vertical 26 situé sur l'autre face intérieure des éléments de paroi 16,17 et auquel le premier profilé 10 est fixé au moyen de boulons 27, de telle manière que ces derniers enserrent entre eux l'âme des éléments 16,17, ledit profilé en U 26 pénétrant à force dans les surfaces de ces éléments.

Sur la fig.3, on a représenté un système de rigidification et de raccordement des éléments de paroi voisins 28,29 montés par emboitement sur des liteaux 30, qui sont, pour ainsi dire, incorporés au mur de la construction. Le système de rigidification et de raccordement des éléments de paroi 28 et 29 voisins se compose, d'une part, d'une languette ou plaque métallique allongée plane 31 située sur le côté extérieur et portant un treillis métallique 32, qui est fixé par des vis 33, avec ou sans la présence d'embouts ou de tétons saillants 23, comme dans le cas des fig.1 et 2, et d'autre part, d'un profilé vertical 35 en U, en coupe transversale, dont les extrémités des branches forment des rabats extérieurs plats 36 qui sont parallèles à la surface intérieure des âmes 37,38 des éléments de paroi 28,29, et dont le côté du fond en U 39 est engagé dans des évidements correspondants des bords jointifs des deux éléments.

Ces évidements délimitent un espace suffisamment grand pour loger ce fond en U 39 du profilé 35 ainsi que le liteau 30 de telle manière que le profilé 35 et la plaque 31 enserrent, eux, les éléments de paroi ainsi que le liteau 30, selon un mode d'assemblage intégré. Le profilé 35, la plaque 31 et les éléments 28,29 sont maintenus ainsi fixés par des boulons 40 s'engageant dans les rabats 36 du profilé.

On notera, par ailleurs, que les éléments de paroi conformes à l'invention peuvent s'appliquer comme éléments d'isolation par l'extérieur sur les murs d'une construction existante, avec un bardage par enduit armé et/ou porter éventuellement un motif décoratif.

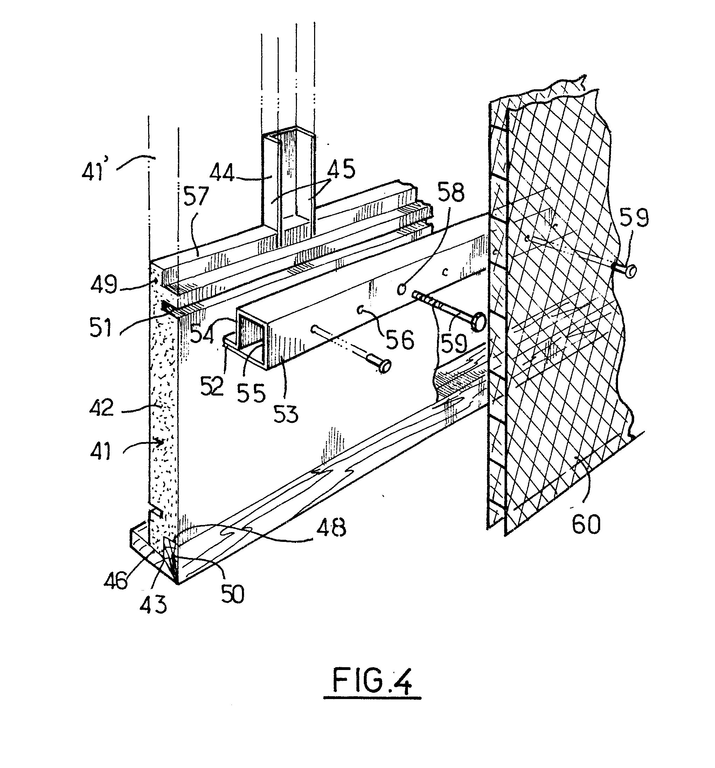

La fig.4 représente une variante de réalisation des éléments de paroi selon l'invention, tels que 41, destinés à constituer une partie d'un mur vertical et comportant une âme 42 de forme générale allongée et rectangulaire est monté sur une lisse de répartition basse 43 tout en étant appliqué par sa face arrière contre plusieurs potelets verticaux tels que 44 qui sont disposés à intervalles réguliers et forment une ossature verticale d'ensemble non représentée en détail. Comme on le voit, les ailes verticales latérales 45 des potelets en forme de U en coupe transversale s'engagent, à l'état monté fini, dans l'âme 42 de l'élément 41.

Sur sa face avant, l'âme 42 comporte, sur deux bords opposés 46,47, - à savoir à sa base et à sa partie supérieure - des feuillures 48 et 49 à angle rentrant à 90° qui sont parallèles auxdits bords de l'âme 42. La feuillure 48 s'emboite sur une moulure 50 de forme correspondante et complémentaire que porte le haut de la lisse 43 réalisée, par ailleurs, sous la forme d'une poutre.

Sur son bord supérieur comportant une moulure 47, l'âme 42 est munie, à proximité de la feuillure 49, d'une rainure longitudinale horizontale 51 permettant l'emboitement d'une aile horizontale 52, d'un profilé extérieur longitudinal 53 réalisé de préférence en fibre de verre ou en une matière synthétique ayant les propriétés mécaniques requises pour l'usage envisagé. Ce profilé est représenté avec une section transversale carrée, mais qui pourrait être rectangulaire. L'aile latérale 52 prolonge la face inférieure du profilé et est perpendiculaire à la face de l'âme 42 de l'élément de paroi et possède des dimensions correspondant à celles de la rainure 51. Par ailleurs, la dimension transversale ou hauteur de la face 54 du profilé parallèle à l'âme 42 est au moins égale à la distance existant entre la rainure 51 et le bord voisin de la feuillure 49 de sorte que, une fois monté dans la rainure, le profilé 53 est au moins au droit de la feuillure 49, en délimitant avec celle-ci un logement ouvert en U, dans lequel peut être introduit le bord inférieur de forme correspondante d'un autre élément de paroi tel que 41'.

En outre, la face verticale 55 du profilé à l'opposé de sa face 54, comporte, d'une part, des taraudages 56 aptes à recevoir des organes de fixation 17 du type vis, boulons ou analogues, et des taraudages 58 - ceux-ci également prévus dans la face 54 du profilé - aptes à recevoir des organes de fixation 59 tels que des boulons traversants s'étendant à travers l'âme 42 et le potelet 44 et serrés par des écrous appropriés non représentés sur la face arrière de l'élément de paroi 41.

Ici également, les organes 57 et 58 servent à fixer aux profilés tels que 53, et donc aux éléments de paroi 41, une armature 60, du même type que l'armature 6 des fig.1 à 3.

Le montage de l'élément de paroi 41 est le suivant : on insère l'aile 52 du profilé 53 dans l'âme 42, puis on soulève l'ensemble par le profilé et on pose l'âme 42 sur la lisse inférieure 43 en emboîtant la feuillure 48 de l'âme sur la moulure saillante 46 de la lisse, ladite âme 42 étant insérée entre les bords avant des ailes 45 des potelets 44 et la moulure. Puis, dans l'ouverture supérieure en U délimitée par la feuillure supérieure 49 de l'âme 42 et la face 54 du profilé 53, on introduit un autre élément de paroi tel que 41' représenté en trait mixte comportant une feuillure d'une forme complémentaire correspondant à celle du bord supérieur 47 de l'âme 42 de l'élément de paroi 41.

Ainsi, l'élément 41' est déjà soutenu verticalement et latéralement par l'élément 41 muni du profilé 53. Ensuite, on fixe les boulons 59 en les serrant de sorte que les ailes 45 des potelets s'enfoncent dans le corps de l'âme 42, en assurant un rôle de rigidification. Puis, on fixe en dernier lieu l'armature 60 à l'aide des vis 57 sur le profilé 53.

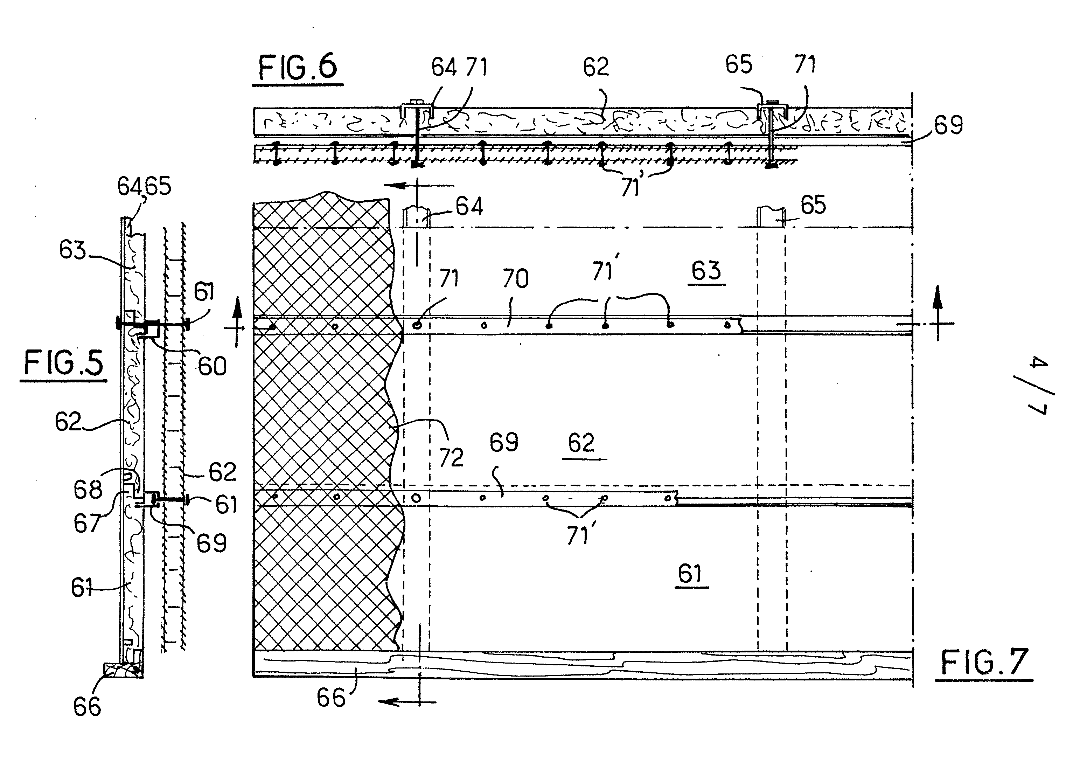

Sur les fig.5 à 7, on a représenté un pan de mur vertical formé par plusieurs éléments de paroi 61, 62,63 assemblés contre des potelets verticaux 64,65, comme indiqué en référence à la fig.4, l'élément 61 reposant sur la lisse inférieure 66.

Comme on le voit sur la fig.5, les feuillures de l'élément de paroi 61 sont disposées sur une même face, alors que les autres éléments 62,63 comportent des feuillures haute et basse 67,68 (ainsi que les rainures voisines) situées sur les deux faces opposées de l'élément de manière à permettre l'accouplement successif par emboitement de plusieurs éléments superposés. Ainsi,

- 13 -

0085011

les profilés 69, 70, etc... emboités dans les éléments associés 61, 62, 63, etc... sont tous situés d'un même côté - extérieur - du mur, en étant fixés aux potelets 64,65, etc... par des boulons traversants 71, tandis que l'armature 72 est ensuite fixée par éléments ou sous forme d'une bande continue aux profilés 69,70, etc... à l'aide de vis 71'.

Une variante renforcée consiste à emboiter des profilés 69,70 à l'intérieur du mur constitué par les éléments associés 61,62,63 et à les fixer aux profilés 69,70 de l'extérieur par des boulons traversants 71.

Le montage de l'ensemble est identique à celui décrit pour la pose de l'élément de paroi 41 de la fig.4 et se répète pour le nombre nécessaire d'éléments de paroi jusqu'à la hauteur requise, après quoi, on installe une lisse de répartition supérieure non représentée, en forme de poutre, semblable à la lisse inférieure 66 et s'emboitant sur le bord supérieur à feuillure de l'élément de paroi le plus haut.

Dans les formes de réalisation des fig.4 à 7, on notera que les profilés 53,69,70, servent simultanément d'entretoises entre l'âme 42, 61, 62, 63 et l'armature 60, 72 et de moyens de rigidification de ladite âme, avec fixation par boulonnage aux potelets 44 au moyen des boulons traversants 59.

L'élément de paroi modulaire ou panneau-mur décrit précédemment, est également parfaitement utilisable dans le cadre de la technique dite"à coffrage perdu", et sert alors de coffrage perdu dans le cas où l'armature 60,72 est enrobée dans un coulage de béton formant la paroi extérieure, et est mis en oeuvre avec un contre-coffrage et des entretoises mobiles retirées à l'avancement de la coulée du béton.

Dans le cas de l'utilisation de l'élément de paroi modulaire ou panneau-mur selon l'invention, en tant que coffrage à isolation intégrée avec un contre-coffrage, d'une part, ce dernier peut être récupérable et d'autre part, il est possible d'utiliser des potelets amovibles (non représentés aux dessins) de renfort lors de la coulée de béton.

Selon ce système d'application de l'invention, l'élément de paroi modulaire ou panneau-mur muni de son ossature (potelets 44,64,65) peut être caractérisé comme possédant une surface plane dite face réutilisable, sur laquelle l'ossature du panneau est encastrée dans l'âme 42,61,62 ou 63 de ce dernier, ainsi qu'une face dite "face fixe", caractérisée par des profilés amovibles dans l'âme du panneau et gainée dans les profilés spéciaux pour lisse haute, lisse basse et potelets d'extrémité du pan de mur formé.

Dans cette variante de réalisation, il est prévu une lisse haute et une lisse basse en U réservant un espace suffisant pour y installer lesdits potelets amovibles de renfort qui s'entretoisent à l'aide de boulons traversants, du type 59,71, avec l'ossature encastrée de la face réutilisable, la lisse haute et la lisse basse devenant potelets d'extrémité (et réciproquement) si le panneau est disposé en hauteur dans sa plus grande dimension.

La mise en place du coffrage à isolation intégrée et de son contre-coffrage à l'identique - donc récupérable - se caractérise par un couplage de la face fixe à la face récupérable à l'aide de tiges filetées, non représentées (ou tout autre moyen approprié) permettant un réglage de l'espace désiré pour couler le mur en béton armé ou non et donc avec ou non mise en place d'une carcasse métallique. Ces tiges filetées relient alors les potelets et traverses des deux faces du coffrage.

De plus, ce dispositif de coffrage est également caractérisé par le fait que des cornières d'angle et d'extrémité, non représentées aux dessins, viennent en recouvrement, aux angles et aux extrémités des deux faces, pour assurer l'étanchéité et la rigidité de l'espace coffré.

Par ailleurs, dans ce dispositif de coffrage, la face fixe et la face réutilisable reçoivent entre la lisse haute et la lisse basse des potelets amovibles de renfort pour supporter la pression de la coulée du béton.

Lors de la mise en oeuvre de cette variante, on décoffre la face réutilisable - en temps opportun - en sectionnant les boulons traversants qui la relient à la face fixe, au ras de l'âme du panneau.

Enfin, ce dispositif de coffrage est caractérisé par le fait que ladite face réutilisable devient la face fixe lors de l'opération suivante de coffrage et ainsi de suite.

Selon une autre variante de mise en oeuvre, dans le cas d'une construction dans laquelle les potelets 44 sont verticaux (fig.4 à 7) et ancrés dans les fondations sans lisse basse, les moyens d'accouplement 47,48,49,67,68, et les profilés tubulaires 53,69,70 sont horizontaux.

Par contre, dans le cas d'une construction dans laquelle les potelets 44 sont horizontaux, les profilés tubulaires 53,69,70 encastrés dans les âmes 42 sont verticaux et ancrés sans lisse basse.

Par ailleurs, l'armature 60,62 peut rester à l'état brut (une à trois épaisseurs) sans revêtement ou bien peut comporter une protection par peinture, enduits divers ou même porter un tissu.

Il est également possible d'utiliser seulement une partie de l'élément de paroi comme coffrage perdu avec l'armature 60 ou 72 enrobée dans un coulage de béton constitutif d'un mur traditionnel.

Selon une variante possible, l'armature peut supporter, ou même être remplacée par un masque étanche, non représenté et constitué par une membrane bitumineuse ou en résine synthétique.

La fig.8 illustre une autre variante avantageuse du panneau-mur selon l'invention et qui se compose d'éléments de paroi tels que 73 et 74 (vue partielle) comportant des feuillures complémentaires 75,76, emboitées et ajustées l'une dans l'autre, et qui sont réunis, sur leur face arrière, par un potelet 77 en U, en coupe transversale et dont les ailes latérales 78 sont encastrées dans les âmes des éléments 73,74 qui sont constitués par exemple par une mousse sythétique ou des déchets industriels et agricoles comprimés.

Sur l'autre face ou face extérieure, les éléments de paroi sont maintenus par au moins un profilé de support 79 en forme générale de T disposé orthogonalement par rapport au potelet 77, et, dans le cas d'éléments de toiture, suivant la ligne de plus grande pente.

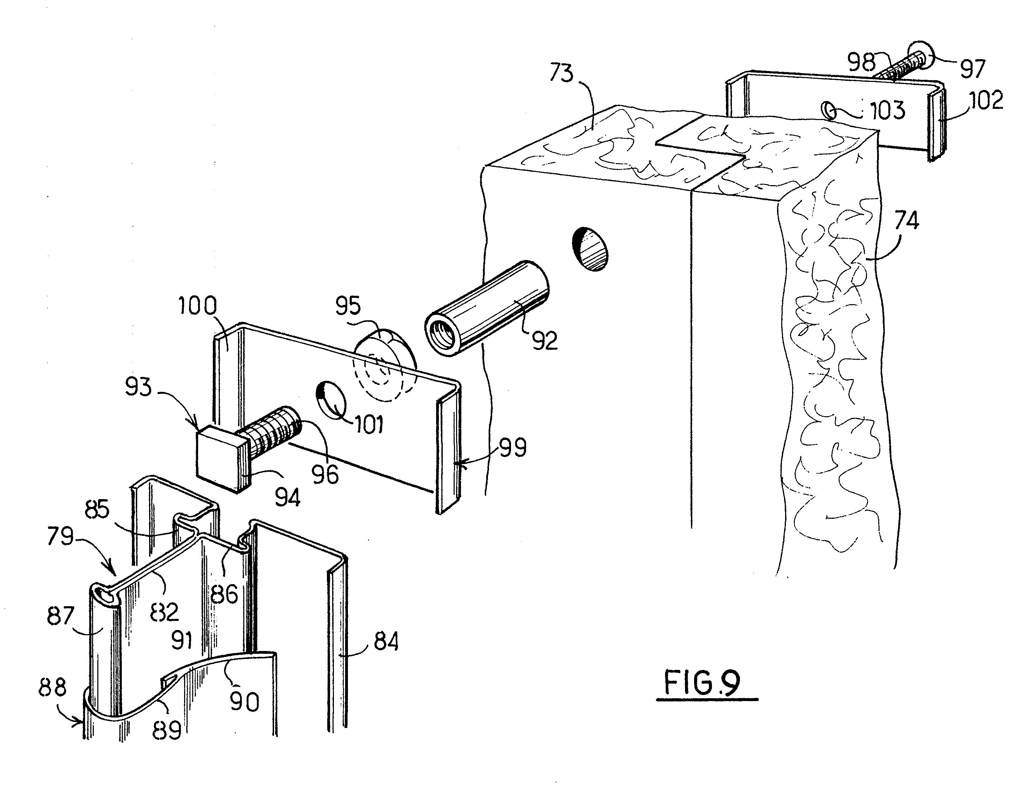

Le profilé de support en T 79 constitue un moyen de fixation d'un revêtement 80 en forme de panneaux, représenté en pointillés sur la fig.8 (voir aussi fig.9 et 10) sur les âmes des éléments de paroi 73,74, et assure deux autres fonctions, à savoir : une fonction d'entretoise entre le revêtement 80 et lesdits éléments,assurant simultanément une rigidification supplémentaire de l'ensemble et une fonction d'évacuation des eaux de pluie et de ruissellement.

En outre, il est prévu des moyens d'accrochage du revêtement 80 décrits en détail en référence à la fig.9.

Le profilé de support en T 79, qui,comme cela est visible sur la fig.8,est appliqué par sa barre transversale ou base 81, à plat contre les âmes des éléments 73,74 et dont l'âme 82 est perpendiculaire au plan de la face desdits éléments, comporte deux canaux ou gouttières extérieures latérales 83 parallèles au plan des éléments de paroi et tournant leur concavité vers les plaques de revêtement 80.

Chaque gouttière 83 comporte un bord extérieur 84 rabattu parallèlement à l'âme 82 du profilé 79 et un repli saillant latéralement 85, situé près du plan de ladite âme 82. Les replis 85 délimitent sur la face du profilé 79 tournée vers les éléments de paroi 73,74, une rainure centrale 86 de forme générale trapézoïdale et destinée à recevoir en partie des moyens d'assemblage rigide, mais démontable, des pièces 73,74,77,79.

Comme indiqué plus haut (voir fig.9 et 10) il est prévu des moyens d'accrochage des plaques ou panneaux de revêtement 80, constitués d'une part, d'un organe fixe d'accouplement 87 solidaire du profilé 7.9, et d'autre part, d'un organe amovible d'accouplement 88 en forme de clip élastique (par exemple en une matière rigide, mais ayant une certaine élasticité) destiné à retenir en position les plaques de revêtement 80. Les organes d'accouplement 87 et 88 peuvent être réunis l'un à l'autre en enserrant les plaques 80 selon une liaison par formes complémentaires avec emboitement par encliquetage brusque.

En effet, dans la forme de réalisation préférée de la fig.9, l'organe d'accouplement 77 est formé par un double rebord longitudinal d'accrochage solidaire du profilé en T 79 et disposé parallèlement au plan de la base 81 du profilé et l'organe d'accouplement 88 est constitué sous la forme d'un clip, par exemple du PVC, composé d'un élément ou chapeau 89 en U renversé en coupe transversale, dont les extrémités des branches sont solidaires de deux flasques latéraux obliques 90 rentrant intérieurement au niveau de leur jonction avec les branches du U, par des bords saillants 91 et délimitant une ouverture en forme de fente dont la largeur est inférieure à la largeur du rebord 87 qui - à l'état accouplé - est emboité dans la cavité du U 89 au-delà de ladite fente.

On va décrire ci-après en détail les moyens d'assemblage intégrés et démontables qui sont formés d'un système de boulonnage au recto et au verso des éléments de paroi 73,74 en association à un manchon-entretoise 92 encastré dans lesdits éléments.

Ces moyens comprennent un boulon 93 dont la tête carrée 94 est montée prisonnière dans la rainure 86 du profilé en T 79 et est bloqué contre la barre transversale ou base 81 de ce dernier par un écrou 95 vissé sur la tige filetée 96 du boulon, ledit manchon-entretoise 92 vissé sur l'extrémité de la tige 96, et une vis à tête plate ou faiblement bombée 97 dont la tige 98 est insérée depuis l'autre face des éléments de paroi 73,74 dans le manchon 92 et qui serre le profilé 79 contre les éléments 73,74 qui, (voir aussi fig.10), sont intercalés entre la vis 97 et l'écrou 95.

A cet effet, un évidement traversant de forme appropriée est ménagé dans les âmes des éléments de paroi 73,74.

En outre, comme cela est visible sur les fig. 9 et 10, un cavalier 99 en forme de U en coupe transversale est monté entre les éléments 73,74 et la base 81 du profilé 79 et ses ailes latérales 100 enserrent étroitement les bords 84 de la base 81 Ce cavalier comporte une ouverture 101 permettant le passage de la tige filetée 96.

De plus, il est également prévu un cavalier 102 situé sur la face arrière des éléments de paroi 73,74 en vue d'assurer un bon appui à la vis 97 et muni d'une ouverture 103 pour le passage de cette dernière.

On notera que ce cavalier peut en réalité être supprimé et remplacé de fait par un potelet de l'ossature de support d'un panneau-mur formé par assemblage d'éléments de paroi tels que 73 et 74, (voir fig.10).

Comme le montre la fig.10 représentant un panneau-mur autoporteur formé de plusieurs éléments de paroi tels 73,74 empilés et juxtaposés entre des éléments métalliques d'ossature en forme de U en coupe transversale, tels 77, horizontaux, encastrés dans lesdits éléments sur une de leurs faces et des profilés en T, tels 79, formant des potelets verticaux, il est possible d'insérer entre ces derniers des panneaux 104 de capteurs solaires ou des voliges en bois 105 constituant le revêtement 80 de la fig.8.

Naturellement, dans ce type de réalisation, le clip d'accrochage amovible 88 retenant le revêtement est un profilé plastique d'un seul tenant sur toute la hauteur du profilé du support en T 79.

Dans cet agencement, on voit que l'on peut aisément - lors du montage du mur - insérer librement les panneaux 104, les voliges 105 ou autres entre les profilés 79 et fixer ensuite les clips 88 par encliquetage sur les profilés.

Les éléments de revêtement 80 peuvent être constitués au choix par exemple - en dehors des panneaux de capteurs solaires et des voliges en bois - par des produits verriers, des produits minéraux comprimés ou non, de l'amiante-ciment, du silico-calcaire , des tôles d'acier ou d'aluminium ou même des bardeaux pour toitures.

REVENDICATIONS

1°) Elément de paroi composite modulaire tel qu'un panneau de gros-oeuvre auto-porteur à isolation intégrée, utilisable pour la réalisation d'ouvrages dits de thermo-maçonnerie, c'est-à-dire d'ouvrages composés de matériaux isolants unis par une ossature adaptée, notamment du type panneau-mur autoporteur pour murs extérieurs et intérieurs et/ou toitures de maisons individuelles, de constructions légères telles que des bungalows démontables, des abris de surveillance, des hangars industriels et agricoles et des abris provisoires de chantiers, caractérisé en ce qu'il est constitué par une âme (5,37,38, 42,73,74) à grand pouvoir d'isolation thermique et /ou phonique, et par au moins une armature (6,20,32;60,72,87,88) servant de moyens d'accrochage à un revêtement, celle-ci étant reliée sur au moins l'une des faces de ladite âme par des moyens de fixation (8,12,31,53,56,79), cet élément composite comportant des moyens (9,18,26,31,35,44,64,65;79) de rigidification de l'âme servant simultanément de moyen d'accouplement des âmes (5,37,38;42;73,74) de plusieurs éléments de paroi (1,4,16,17,28,29, 41,41',73,74) entre eux.

2°) Elément de paroi selon la revendication 1, caractérisé en ce que les moyens (8,12,31,53,56,79) de fixation de l'armature (6,20,32,60,72,87,88) à l'âme (5,37,38,42,73,74) de l'élémént de paroi modulaire sont constitués par au moins un profilé rigide allongé, rapporté par rapport à ladite âme et formant entretoise entre le revêtement et l'âme.

3°) Elément de paroi composite selon l'une quelconque des revendications 1 et 2, caractérisé en ce que l'organe rigide de fixation (8) est un profilé tubulaire métallique dont le côté plat jouxtant l'âme isolante (5) comporte une bande latérale plate (11) s'appliquant sur l'âme et sur lequel est vissée (12) l'armature (6), ledit profilé (8) étant fixé à l'âme isolante (5) par des boulons traversants (13).

4°) Elément de paroi composite selon l'une quelconque des revendications 1 à 3, caractérisé en ce que les moyens de rigidification des âmes isolantes (5), servant à accoupler les âmes de plusieurs éléments de paroi (1,4), sont constitués par un profilé en U (9) dont les ailes latérales (14) sont encastrables dans les âmes contigües de deux éléments de paroi voisins (2,3), sur la face opposée à la face portant le ou les organes rigides de fixation (8).

5°) Elément de paroi composite selon l'une quelconque des revendications 1 à 3, caractérisé en ce que les moyens de rigidification et d'accouplement des âmes d'éléments de paroi voisins (16,17) sont constitués par un premier profilé (18) en forme de oméga fermé en coupe transversale, dont la face plane (19) en forme de bande sert à la fixation des éléments de revêtement (16,17) et recouvre les bords jointifs des âmes de ces deux éléments de paroi voisins.

6°) Elément de paroi composite, selon l'une quelconque des revendications 1 à 3, caractérisé en ce que les moyens de rigidification et d'accouplement des âmes (37,38) d'éléments de paroi voisins (28,29) sont constitués par un profilé (35) en U, en coupe transversale, dont les extrémités des branches forment des rabats extérieurs (36) parallèles à la surface des âmes et dont le côté (39) du fond du U est engagé en renfoncement dans un évidement correspondant des deux éléments de paroi voisins (28,29) en enserrant entre lui-même et ces derniers un liteau (30) d'une ossature destinée à porter les éléments de paroi, et par une cornière métallique plate (31) qui est reliée au profilé en U (35) par des boulons (40) fixés aux rabats extérieurs (36) des branches de ce dernier en enserrant entre eux les âmes (37,38) des deux éléments de paroi voisins (28,29).

7°) Elément de paroi composite selon la revendication 1, caractérisé en ce qu'il comporte des moyens d'accouplement à profils complémentaires (47,48,49,67,68) situés sur une face ou sur les deux faces opposées de l'élément de paroi et sur deux bords opposés de l'âme (42) pour son accouplement à d'autres éléments de paroi contigus, et est muni, à proximité de chacun desdits moyens d'accouplement, d'une rainure longitudinale d'emboitement (51) recevant l'aile latérale (52) d'un profilé tubulaire amovible (53,69,70) de forme correspondante constituant lesdits moyens de fixation et servant de moyens de manipulation dudit élément de paroi (41,41'; 61, 62,63).

8°) Elément de paroi composite selon la revendication 7, caractérisé en ce que les moyens d'accouplement (47,48, 49,67,68) sont des feuillures (48,49,67,68) à angle rentrant de 90° et des moulures (47) à angle sortant de 90°, disposées parallèlement sur deux bords opposés de l'élément de paroi.

9°) Elément de paroi selon l'une quelconque des revendications 7 et 8, caractérisé en ce que le profilé tubulaire (53,69,70) est de forme carrée ou rectangulaire en coupe transversale et comporte une aile latérale (52) destinée à s'engager dans ladite rainure (51) et prolongeant la face du profilé perpendiculairement à la surface extérieure plane de l'âme (42) de l'élément de paroi, la dimension transversale de la face (54) du profilé (53,69, 71) parallèle à la surface de l'élément de paroi (41,41',61,62,63) étant au moins égale à la distance entre la rainure (51) et le bord voisin de la feuillure (49,67,68) de sorte que, une fois emboité dans la rainure, le profilé (53,69,70) est au moins au droit de la feuillure.

10°) Elément de paroi selon la revendication 9, caractérisé en ce que la feuillure (49,67,68) et le profilé voisin (53,69,70) délimitent un logement ouvert en U, dans lequel est enserré étroitement le bord de forme correspondante d'un élément de paroi voisin (41',62,63).

11°) Elément de paroi selon l'une quelconque des revendications 7 à 10, caractérisé en ce que le profilé (53,69, 70) comporte, sur sa face (55) opposée à celle (54) jouxtant l'élément de paroi (41,41',61,62,63), des taraudages (56,58) de fixations aptes à recevoir des organes, tels que vis, boulons ou autres, de l'armature (60,72) et des boulons traversants (59,71) de liaison de l'ensemble profilé-âme à des potelets transversaux (44,64,65) sur lesquels l'autre face de l'âme (42) prend appui.

12°) Elément de paroi selon l'une quelconque des revendications 7 à 11, caractérisé en ce qu'il est apte à être monté, par l'une de ces feuillures (48) contre une lisse inférieure ou supérieure en forme de poutre (43,66) munie d'une moulure (50) de forme complémentaire de celle de l'élément de paroi (41,61).

13°) Elément de paroi selon l'une quelconque des revendications 7 à 12, caractérisé en ce que le profilé (53, 69,70) est fixé à son homologue de l'autre côté du mur par des boulons traversants (71).

14°) Elément de paroi composite selon la revendication 1, caractérisé en ce que les moyens de fixation (79) sont constitués par un profilé de support en forme générale de T en coupe transversale, servant simultanément d'entretoise entre l'élément de paroi (73,74) et le revêtement (80) en forme de plaques, de moyens supplémentaires de rigidification et de système d'évacuation des eaux pluviales, et que les moyens d'accrochage (87,88) du revêtement (80) sont formés par au moins un organe fixe d'accouplement (87) solidaire du profilé de support (79) et par au moins un organe amovible d'accouplement (88) apte à retenir en position ledit revêtement, lesdits organes fixe et amovible d'accouplement (87,88) pouvant être réunis l'un à l'autre selon une liaison par formes complémentaires avec emboitement par encliquetage brusque.

15°) Elément de paroi composite selon la revendication 14, caractérisé en ce que l'organe fixe d'accouplement (87) est formé par un double rebord longitudinal d'accrochage solidaire du profilé en T (79) disposé parallèlement au plan de la base (81) de ce dernier, et que l'organe amovible d'accouplement (88) est constitué par un clip élastique d'accrochage qui se compose d'un élément en U renversé en coupe transversale (89) dont les extrémités des branches sont solidaires de deux flasques latéraux obliques (90) rentrant intérieurement au niveau de leur jonction avec les branches du U par des bords saillants (91) et délimitant une ouverture en forme de fente dont la largeur est inférieure à la largeur du rebord double (87) du profilé en T, qui - à l'état accouplé - est emboité dans la cavité du U (89) au-delà de ladite fente.

16°) Elément de paroi composite selon la revendication 15, caractérisé en ce que le profilé de support en T (79) comporte deux gouttières extérieures latérales (83) parallèles au plan de l'élément de paroi (73,74) tournant leur concavité vers les plaques de revêtement (80) et comprenant chacune un bord extérieur (84) rabattu parallèlement à l'âme (82) du profilé en T et un repli saillant latéralement (85) situé près du plan de ladite âme, lesdits replis (85) délimitant, sur la face du profilé (79) tournée vers l'élément de paroi (73,74), une rainure centrale (86) de forme générale trapézoïdale.

17°) Elément de paroi composite selon l'une quelconque des revendications 14 à 16, caractérisé en ce qu'il comporte des moyens (92,98) d'assemblage intégrés et démontables constitués par un système de boulonnage recto-verso (93,98) avec manchon-entretoise (92) encastré dans l'élément de paroi.

18°) Elément de paroi composite selon la revendication 17, caractérisé en ce que les moyens d'assemblage (92,98) comprennent un boulon (93) dont la tête carrée (94) est montée prisonnière dans la rainure (86) du profilé en T (79) et est bloquée contre la base ou la barre transversale (81) de ce dernier par un écrou (95), un manchon-entretoise (92) vissé sur l'extrémité de la tige filetée (96) du boulon (93) ressortant hors de l'écrou, et une vis (97) insérée depuis l'autre face de l'élément de paroi (73,74) dans le taraudage du manchon (92) et serrant le profilé en T contre l'élément de paroi.

19°) Elément de paroi selon la revendication 18, caractérisé en ce qu'il est prévu un premier cavalier intermédiaire en U (99) en coupe transversale disposé entre l'écrou (95) et le profilé en T (73,74) et enserrant la base de ce dernier, et un second cavalier en U (102) fixé sur la face arrière de l'élément de paroi et formant plaque d'appui rigide pour la tête de la vis de fixation (97), le cavalier (102) étant constitué directement par un potelet métallique (77) en U en coupe transversale, formant un élément d'ossature de support de plusieurs éléments de paroi (73,74).

20°) Elément de paroi composite selon l'une quelconque des revendications 14 à 19, caractérisé en ce qu'il comporte au moins sur une face, une lame d'air ménagée grâce à l'un des organes de fixation (79).

FIG.1

FIG.2

FIG.3

2/7

0085011

FIG.4

FIG.6

FIG.5

FIG.7

FIG.8

FIG.9

FIG.10

0085011

**Office européen des brevets**

**RAPPORT DE RECHERCHE EUROPEENNE**

Numéro de la demande

EP 83 40 0160

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-4 241 555 (DICKENS) <br> * Colonne 3, lignes 1-16, 29-46; colonne 4, lignes 2-52; colonne 5, lignes 8-20; figures 1-3 * | 1,2 | E 04 C 2/22 <br> E 04 C 2/26 <br> E 04 B 2/76 <br> E 04 B 2/60 |
| | --- | | |
| X | US-A-3 401 494 (ANDERSON) <br> * Colonne 2, lignes 36-59; colonne 3, lignes 38-45; figures 1-3 * | 1 | |
| | --- | | |
| A | FR-A-2 295 183 (BESSIERE) <br> * En entier * | 1 | |
| | --- | | |
| A | FR-A-1 097 877 (DUTRIE) <br><br> * Page 1, colonne 2, paragraphes 6-9; figures 1-3 * | 14-16, 18 | |
| | ----- | | |

**DOMAINES TECHNIQUES RECHERCHES (Int. Cl. 3)**

E 04 C
E 04 B

Le présent rapport de recherche a été établi pour toutes les revendications

| Lieu de la recherche <br> LA HAYE | Date d'achèvement de la recherche <br> 28-03-1983 | Examinateur <br> DALL'ANESE D.D. |
|---|---|---|

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82